Europäisches Patentamt

European Patent Office

Office européen des brevets

(19)

(11) Publication number: **0 092 356**
**B1**

# EUROPEAN PATENT SPECIFICATION

(12)

(45) Date of publication of the patent specification:
**12.03.86**

(51) Int. Cl.⁴: **B 01 J 13/02**

(21) Application number: **83302008.4**

(22) Date of filing: **11.04.83**

---

(54) A process for manufacturing minute capsules.

---

(30) Priority: **20.04.82 US 370323**

(43) Date of publication of application:
**26.10.83 Bulletin 83/43**

(45) Publication of the grant of the patent:
**12.03.86 Bulletin 86/11**

(84) Designated Contracting States:
**AT BE CH DE FR GB IT LI LU NL SE**

(56) References cited:
**EP - A - 0 046 415**
**BE - A - 829 482**
**FR - A - 2 114 380**
**FR - A - 2 445 171**
**GB - A - 2 073 132**
**US - A - 4 105 823**

(73) Proprietor: **APPLETON PAPERS INC., P.O.
Box 359 825 East Wisconsin Avenue, Appleton
Wisconsin 54912 (US)**

(72) Inventor: **Hayford, Donald Edward, 512 East Parkway
Blvd, Appleton Wisconsin Wi 54911 (US)**

(74) Representative: **Norris, Richard John et al, The Wiggins
Teape Group Limited Group Patents Departement
Butlers Court, Beaconsfield Buckinghamshire HP9 1RT
(GB)**

---

ACTORUM AG

## Description

The present invention relates to a process for manufacturing minute capsules having walls of melamine-formaldehyde polymeric material. The capsules are particularly but not exclusively for use in pressure-sensitive copying systems.

One type of pressure-sensitive copying system is disclosed in U.S. Patent No. 2,730,456 and is commonly referred to as a manifold copying system. This manifold copying system comprises an upper sheet coated on its lower surface with microcapsules containing a solution of a colourness chromogenic material, and a lower sheet coated on its upper surface with a colour developing co-reactant material, e.g. an acidic clay, a phenolic resin or certain organic salts. When more than two plies are required in the record material to produce a greater number of copies, a number of intermediate sheets are also provided, each of which is coated on the lower surface with microcapsules containing colourness chromogenic material and on the upper surface with the colour developing co-reactant material. Pressure exerted on the sheets by writing or typing ruptures the microcapsules, thereby releasing the chromogenic material solution on to the co-reactant material on the next lower sheet and giving rise to a chemical reaction which develops the colour of the chromogenic material.

Another type of pressure-sensitive copying system is known as a self-contained system and is disclosed in U.S. Patent Nos. 2,730,457 and 4,197,346. Microcapsules containing a chromogenic material solution and a co-reactant material are coated on the same surface of a sheet of paper. Pressure exerted on the sheet by writing or typing causes the capsules to rupture and release the chromogenic material, which then reacts with the co-reactant material on the sheet to produce a colour.

Microcapsules for use in the above-described pressure-sensitive copying systems have a series of stringent property requirements so as to produce an optimum copying system. Some of these properties are capsule strength, colour size distribution range and wall integrity (impermeability).

Several methods have been proposed for the manufacture of microcapsules of which the walls are wholly or in part of melamine-formaldehyde polymeric material. For example U.S. Patent No. 4,105,823 discloses a method of encapsulating a chromogenic material to produce microcapsules in which the capsule wall material is produced by the acid catalysis of a water-soluble urea-formaldehyde precondensate and a water-soluble melamine-formaldehyde precondensate in the presence of a water soluble polymer, which is capable of being crosslinked by the precondensates.

U.S. Patent No. 4,100,103 discloses a method of encapsulating by an in situ reaction of melamine and formaldehyde and/or polymerization of monomeric methylol melamine or etherified methylol melamine, or a low molecular weight polymer thereof in the presence of one of a number of specified negatively-charged, carboxyl-substituted linear aliphatic hydrocarbon polyelectrolyte material dissolved in an aqueous vehicle.

U.S. Patent No. 4,233,178 discloses a method of encapsulating by forming a dispersion of intended capsule nucleus material in an aqueous solution of a styrene-maleic anhydride copolymer polyelectrolyte, adding a melamine-formaldehyde precondensate and heating the mixture to form a microcapsule wall.

GB-A-2073132A discloses a method of encapsulating in which a melamine formaldehyde precondensate and a water-soluble polymer, neither of which is dispersion-stabilising, are interacted to produce a dispersion-stabilising species, and after a dispersion of oil droplets is formed, the melamine formaldehyde precondensate is subjected to acid-catalysed condensation to form microcapsule walls.

BE-A-829482 discloses a method in which oil droplets are dispersed in an aqueous medium in the presence of a polymeric non-proteinaceous emulsifying agent, and an impermeable coating is formed around the oil droplets by the addition of a suitable material which may, inter alia, be a thermosetting urea-formaldehyde or melamine-formaldehyde resin.

The process disclosed in U.S. Patent No. 4,100,103 has been successfully used on a commercial scale to encapsulate solutions of chromogenic materials for use in pressure sensitive copying papers.

Hydrolyzed maleic anhydride copolymers are disclosed as the preferred polyelectrolyte materials for use in the process of U.S. Patent No. 4,100,103, and of these, the most preferred is poly(ethylene-co-maleic anhydride) (hereinafter referred to as EMA) because of its commercial availability and the balance of properties provided to the encapsulation process.

The cost of EMA has recently been rising rapidly, producing a consequent rise in the cost of the microcapsules manufactured by the process in which EMA constitutes the polyelectrolyte. Because of cost and availability considerations, poly(acrylic acid) (hereinafter referred to as PAA), is a logical substitute for EMA as the polyelectrolyte. While microcapsules made by the process according to U.S. Patent No. 4,100,103, in which PAA constitutes the polyelectrolyte, are of commercial quality for use in pressure-sensitive copying paper, they do not possess the optimum balance of properties obtained when EMA is utilized.

One function of the polyelectrolyte in U.S. Patent No. 4,100,103 is to take an active part in the polymerization reaction of the starting materials used to form the condensation polymer which makes up the resulting capsule walls. Under equivalent reaction conditions, use of PAA results in slower capsule wall formation than when EMA is used.

Another function of the polyelectrolyte is to act as an emulsifying agent to promote and maintain the separation of the individual droplets of the intended capsule nucleus material in the aqueous manufacturing vehicle. When PAA is utilized as the polyelectrolyte, emulsification of the intended capsule nucleus material requires more energy input and time and produces a poorer drop size distribution than when EMA is employed. It has now been found that the poorer emulsifying power of PAA can be offset by mixing in, prior to emulsification, the starting materials (e.g. methylated methylol melamine) employed in the in situ polymerization reaction to form the condensation polymer which makes up the resulting capsule walls. The presence of methylated methylol melamine or a low molecular weight polymer thereof, (hereinafter referred to as MMM) during the intended nucleus material emulsification step can result in the premature polymerization of the MMM. This tendency of the MMM to prematurely react under these circumstances is reduced by raising the pH of the PAA-MMM solution to the highest level at which emulsification of the intended nucleus material can be obtained. Once a satisfactory intended nucleus material emulsion is obtained, the pH of the emulsion must be reduced in order to obtain the deposition of satisfactory capsule walls in a reasonable amount of time. This alternative procedure outlined above has been further modified by utilizing the steps of:

(1) establishing an aqueous solution of a mixture of the MMM and a portion of the PAA, at as high a pH at which a satisfactory emulsion can be achieved,

(2) emulsifying the intended capsule nucleus material in the aqueous solution,

(3) adding the remainder of the PAA solution at an appropriately lower pH so that the resulting mixture will be at a pH closer to the optimum for polycondensation of the MMM, and

(4) heating the mixture to accelerate the polycondensation of the MMM and the subsequent deposition of the condensation polymer on the dispersed capsule nucleus material.

It has been found that microcapsules made by the above-described procedure are approximately equal in end-use properties for pressure-sensitive copying paper to those manufactured when EMA is employed as the polyelectrolyte in the simpler and more easily controlled process.

It has further been found that when the process is performed substantially as described above but the emulsification step is altered by the introduction of a solution of one or more of certain salts in place of part or all of the additional PAA solution, the microcapsules resulting after polycondensation of the MMM possess improved walls from the permeability standpoint. Furthermore, the resulting microcapsule slurry has a lower viscosity than a slurry made by the process of steps (1) through (4) described previously. The lower viscosity affords the advantages of easier movement of the wet capsule slurry, and the coating of the capsule slurry at a higher solids content with a consequent lower energy requirement for water removal during the drying of the coating, and the improved permeability leads to a capsule-carrying sheet with a greater shelf life.

It has also been found that the introduction, prior to polycondensation of the starting material, of any of these same salts into processes of the kind generally described in U.S. Patent Nos. 4,100,103 and 4,233,178, (using any of the polyelectrolytes disclosed therein), results in the unexpectedly improved capsule wall integrity and reduced capsule slurry viscosity.

According to the present invention there is provided a process for manufacturing minute capsules comprising the step of establishing a dispersion of particles or droplets of a substantially water insoluble capsule nucleus material in an acidic aqueous manufacturing vehicle containing:

a) capsule wall precursor material selected from melamine and formaldehyde; monomeric methylol melamine or a low molecular weight polymer thereof; monomeric methylated methylol melamine or a low molecular weight polymer thereof; or any combination thereof; and

b) a negatively charged polymeric polyelectrolyte having a linear aliphatic hydrocarbon backbone with an average of two carboxyl groups for every four to six backbone carbons;

whereby the water soluble capsule wall precursor material polycondenses to form a condensation polymer, resulting in

i) liquid-liquid phase separation of the resulting condensation polymer above a molecular weight to be soluble in the aqueous manufacturing vehicle, and

ii) after continued polycondensation of the separated polymerization product, in formation of solid capsule wall material individually surrounding particles of the dispersed capsule nucleus material,

characterized in that said dispersion also contains a salt of a Periodic Group 1A cation or a tertiary or quaternary ammonium cation and an anion of a strong acid.

In a preferred embodiment of the process, a solution of the negatively charged polymeric polyelectrolyte is first established in the aqueous manufacturing vehicle, the capsule wall precursor material is then added; the capsule nucleus material is then dispersed into the aqueous manufacturing vehicle, and the salt is then added after which polycondensation of the capsule wall precursor material occurs.

Apart from the salts which are added during manufacture of the minute capsules the present process is similar to that described in U.S. Patent Nos. 4,100,103 and 4,233,178. The materials and procedures generally disclosed in those patents may be used in the present process.

Continuous agitation of the aqueous manufacturing vehicle is normally required in order to obtain a satisfactory dispersion of intended capsule nucleus material. Normally the negatively charged polymeric polyelectrolyte should be present in the aqueous manufacturing vehicle before the substantially water insoluble capsule nucleus material is added.

The acidity of the aqueous manufacturing vehicle is normally derived from the carboxyl groups of the polyelectrolyte, so that no supplementary addition of acid is necessary. However, additional acid could if desired be added.

The strong acid anions may be of inorganic acids, for example chloride, sulphate, phosphate, nitrate or polyphosphate anions, or of strong organic acids, for example citrate, maleate and fumarate anions.

The preferred salts are those of Periodic Group IA cations and chloride, sulphate, phosphate and nitrate anions. Potassium phosphate is the most preferred salt. The salt may be added as such but may also be formed in situ by reaction between a basic salt of the Periodic Group IA cation and a strong acid. The amount of salt may vary widely but an amount of about 1 to about 10 percent by weight, based on the weight of the aqueous manufacturing vehicle, is advantageously employed. The upper limit is chosen more from the standpoint of convenience rather than functionality. Amounts greater than 10 percent by weight can be utilized, but no additional improvements in properties are obtained.

The negatively charged polymeric polyelectrolyte may for example be poly(ethylene-co-maleic anhydride), poly(methyl vinyl ether-co-maleic anhydride), poly(acrylic acid), poly(propylene-co-maleic anhydride), poly(butadiene-co-maleic anhydride), poly(vinyl acetate-co-maleic anhydride) and poly(styrene-co-maleic anhydride). The greatest benefits are derived when the polyelectrolyte material is poly(acrylic acid) or poly(styrene-co-maleic anhydride). The amount of polyelectrolyte material used may vary widely but an amount of about 0.4 to about 15 percent by weight, based on the weight of the aqueous manufacturing vehicle, is advantageously employed. The upper limit is chosen more from the standpoint of economics and convenience rather than functionality. Amounts greater than 15 percent by weight can be satisfactorily utilized, but no additional improvements in properties are obtained.

The process is operable over a wide range of temperatures but a temperature range of about 40°C to about 95°C is preferred. The most preferred temperature range is from about 50°C to about 60°C.

The invention will now be illustrated by reference to the following examples in which:

a) all parts and percentages are by weight unless otherwise specified,

b) all solutions, unless otherwise designated are aqueous solutions,

c) the capsule nucleus material is a solution of chromogenic compounds as listed in Table I.

*Table I*

| Concentration | Chromogenic Material |
|---|---|
| 1.7% | 3,3-bis(p-dimethylaminophenyl)-6-dimethylaminophthalide |
| 0.55% | 2'-anilino-3'-methyl-6'-diethyl-aminofluoran |
| 0.55% | 3,3-bis(1-ethyl-2-methylindol-3-yl)phthalide |

The solvent for the chromogenic compound solution was a mixture of 65 parts of a $C_{10}$ - $C_{13}$ alkylbenzene and 35 parts of benzylated xylenes.

*Example 1*

A solution of 144 g of 12.5% of poly(acrylic acid) having a molecular weight of approximately less than 300,000 ("Acrysol A-5", Rohm & Haas) was partially neutralized with 9.55 g of triisopropanolamine and diluted with water to 840 g total. To 805 g of this solution, which had a pH of 4.55, were added 115 g of a partially methylated methylol melamine resin ("Cymel 382", American Cyanamid) to give, with stirring, a clear solution, pH 4.95. Into 880 g of the resulting solution was emulsified 990 g of the chromogenic compound solution of Table I to yield a 1 to 10 micron droplet size range. Into each of three containers was added a 170 g portion of the above emulsion. The containers were mounted in a room temperature water bath and continuously stirred. One of the following materials was added alternatively to each stirring emuslion:

| Example | Material Added |
|---|---|
| 1A | 30 g water |
| 1B | 30 g of a 13.3% solution of $KH_2PO_4$ |
| 1C | 30 g of a solution containing 3.5 g of poly(acrylic acid) having a molecular weight of less than 50,000 ("Acrysol A-1", Rohm & Haas) and 0.55 g KOH |

The water bath was heated to 56°C and held at this temperature for eight hours to initiate and complete encapsulation. The heating of the bath was then discontinued and stirring of the batches was continued in the cooling water bath overnight. The following day 2.2 ml. of 28% ammonium hydroxide was added to each batch, sufficient 30% KOH was added to each to yield a pH of about 9.5 and sufficient water was added to each batch to bring the total weight of each to 217 g.

The viscosity of each capsule batch was measured with a Brookfield LVF viscometer at 25°C and the results were reported in centipoise (cps) units. For all batches the spindle speed was 60 rpm and for batches 1A and 1C the spindle number was 3 and for batch 1B the spindle number was 1.

The impermeability (or conversely, the permeability) of each capsule batch was determined by the following procedure:

The following mixture was prepared:

| Amount | Material |
|---|---|
| 100 g | Capsule slurry |
| 15 g | 20% ethoxylated corn starch binder |
| 10 g | Wheat starch granules |
| 190 g | Water |

The above mixture was dispersed, coated on a paper base with a wire-wound coating rod and the coating dried for one minute in an oven at 150°C to yield a dry coating weight of 4 g of dried capsules per square metre. A nine square inch (58.064 sq. cm) portion of the capsule coated paper was steeped for 10 minutes with 20 ml. of room temperature toluene to extract only the chromogenic material which was not contained within capsules having impermeable walls. The colour of the chromogenic material was developed with stannic chloride and the amount of colour determined colourmetrically. Another nine square inch (58.064 sq. cm) portion of the same capsule coated paper was extracted with 100 ml. of a solution of three volume percent of concentrated hydrochloric acid in methanol. This procedure, which is performed at 55°C for one hour, extracts all of the chromogenic material from the sheet. The amount of colour in this extract, developed by the presence of hydrochloric acid, was determined colourmetrically. The permeability of the coated capsules, expressed as a percentage, is determined by the following formula:

$$\text{Permeability} = \frac{\text{quantity of colour in toluene extract}}{\text{quantity of colour in methanol extract}} \times 100$$

This permeability, or capsule wall integrity, method is based upon the principle that the room temperature toluene extract removes only the chromogenic material which is not contained within satisfactory, impermeable capsules. The hot methanol extract destroys all capsule walls and removes all of the chromogenic materials from the sheet. These permeability results can be used to predict quality of capsules, for example, the ability of coated capsules to retain their contents during long term storage.

Using the above-described viscosity and permeability procedures, the three capsule batches of Example 1 were compared:

| Example | Total poly (acrylic acid) | Added salt | Batch pH after encapsulation | Final batch viscosity | Permeability |
|---------|---------------------------|------------|------------------------------|-----------------------|--------------|
| 1A | 1.5 g | none | 5.65 | 1030 cps | 34.8% |
| 1B | 1.5 g | 4 g KH₂PO₄ | 5.10 | 44 cps | 3.5% |
| 1C | 5.0 g | none | 4.90 | 1350 cps | 5.5% |

Thus, a batch, which would have a poorer than desired permeability (batch 1A), can be brought into a much more favourable permeability region through the use of additional PAA (batch 1C), but at an increase in batch viscosity. By the use of an added salt (KH₂PO₄), per resulting batch (1B) has both a very satisfactory permeability value and a very low batch viscosity.

### Exemple 2

The procedure of Example 1 was substantially repeated through the emulsification step using the same relative amounts of the same components. Into 170 gram portions of the resulting emulsion was added, alternatively, one of the following materials:

| Example | Material Added |
|---------|----------------|
| 2D | 30 g of a 6.7% solution of KH₂PO₄ |
| 2E | 30 g of a 10.0% solution of KH₂PO₄ |
| 2F | 30 g of a 13.3% solution of KH₂PO₄ |
| 2G | 30 g of a 20.0% solution of KH₂PO₄ |
| 2H | 30 g of a solution containing 3.5 g of poly(acrylic acid) (Acrysol A-1) and 0.27 g KOH |

After addition of the above materials, the encapsulation process and subsequent processes, including capsule coating, were performed as in Example 1.

The capsule slurry viscosity and coated capsule permeability tests were performed for each of the batches of Example 2, using the methods previously described. When measuring the viscosity a spindle speed of 60 rpm was used for all batches, the spindle number being 1 except for batch 2H when it was 3.

The results obtained are listed below:

| Example | Total poly (acrylic acid) | Added salt | Batch pH after encapsulation | Final batch viscosity | Permeability |
|---------|---------------------------|------------|------------------------------|-----------------------|--------------|
| 2D | 1.5 g | 2 g KH₂PO₄ | 5.15 | 61 cps | 4.2% |
| 2E | 1.5 g | 3 g KH₂PO₄ | 5.10 | 49 cps | 3.7% |
| 2F | 1.5 g | 4 g KH₂PO₄ | 5.05 | 44 cps | 4.0% |
| 2G | 1.5 g | 6 g KH₂PO₄ | 5.00 | 41 cps | 3.6% |
| 2H | 5.0 g | none | 4.60 | 1374 cps | 4.4% |

The above results demonstrate that the combined beneficial results of batch viscosity and capsule permeability can be obtained over a wide range of salt quantities.

### Example 3

This example illustrates how the salt may be formed by an in situ reaction.

The procedure of Example 1 was substantially repeated through the emulsification step using the same relative amounts of the same components. Into 170 g portions of the resulting emulsion was added, alternatively, one of the following materials:

| Example | Material Added |
|---|---|
| 3I | 30 g of a solution containing 2.14 g of $H_3PO_4$ and 0.95 g $LiOH.H_2O$ |
| 3J | 30 g of a solution containing 2.14 g of $H_3PO_4$ and 0.9 g of NaOH |
| 3K | 30 g of a solution containing 2.14 g of $H_3PO_4$ and 1.19 g of KOH |
| 3L | 30 g of a solution containing 2.14 g of $H_3PO_4$ and 3.14 g of CsOH |
| 3M | 30 g of a solution containing 2.14 g of $H_3PO_4$ and 3.32 g of $(HOC_2H_4)_3N$ |
| 3N | 30 g of a solution containing 2.14 g of $H_3PO_4$ and 4.70 g of $(HOC_2H_4)_4NOH$ |
| 3O | 30 g of a solution containing 0.5 g of acetic acid |

After addition of the above materials, the encapsulation process and subsequent processes, including capsule coating, were performed as in Example 1. During the encapsulation step, Example 3O coagulated, resulting in a batch which did not produce satisfactory capsules and which could not subsequently be evaluated in the viscosity and permeability tests.

The capsule slurry viscosity and coated capsule permeability tests were performed for each of the batches of Examples 3 I-N, using the methods previously described. When measuring viscosity the spindle speed was 60 rpm and the spindle number was 1 for all the batches 3 I-N. The results obtained are listed below:

| Example | Added salt | Batch pH after encapsulation | Final batch viscosity | Permeability |
|---|---|---|---|---|
| 3I | lithium phosphate | 5.05 | 49 cps | 4.1% |
| 3J | sodium phosphate | 5.10 | 52 cps | 4.2% |
| 3K | potassium phosphate | 5.10 | 50 cps | 3.8% |
| 3L | cesium phosphate | 5.10 | 54 cps | 3.2% |
| 3M | tertiary amine phosphate | 5.15 | 43 cps | 3.4% |
| 3N | quaternary amine phosphate | 5.15 | 44 cps | 4.2% |
| 3O | none | 4.70 | coagulated | — |

The above results demonstrate that Periodic Group IA and low molecular weight, water-soluble tertiary and quaternary amine cations are effective in the practice of the present invention. Example 3O demonstrates that the beneficial effects of the present invention are not merely the result of pH adjustment. Acetic acid was used in this example because of the difficulty of obtaining the proper pH using the strong acid $H_3PO_4$.

### Example 4

The procedure of Example 1 was substantially repeated through the emulsification step using the same relative amounts of the same components. Into 170 g portions of the resulting emulsion was added, alternatively, one of the following materials:

| Example | Material Added |
|---|---|
| 4P | 30 g of 10% $KH_2PO_4$ |
| 4Q | 30 g of 20% KC1 |
| 4R | 30 g of 10% $K_2SO_4$ |
| 4S | 30 g of 20% $KNO_3$ |
| 4T | 30 g of a solution containing 2.5 g of citric acid and 1.0 g of KOH |

The capsule slurry viscosity and coated capsule permeability tests were performed for each of the batches of Example 4, using the methods previously described. When measuring viscosity the spindle speed was 60 rpm and the spindle number was 1 for all batches 4 P-T. The results obtained are listed below:

| Example | Added salt | Batch pH after encapsulation | Final batch viscosity | Permeability |
|---|---|---|---|---|
| 4P | potassium phosphate | 5.10 | 46 cps | 4.6% |
| 4Q | potassium chloride | 5.00 | 35 cps | 3.9% |
| 4R | potassium sulphate | 5.10 | 48 cps | 4.3% |
| 4S | potassium nitrate | 5.10 | 49 cps | 3.8% |
| 4T | potassium citrate | 4.90 | 24 cps | 4.6% |

The above results demonstrate that salts containing anions of common, strong inorganic acids and anions of water soluble, strong organic acids are effective in the practice of the present invention.

### Example 5

The procedure of Example 1 was substantially repeated using the same relative amounts of components through the emulsification step with the exception that poly(ethylene-co-maleic anhydride), M.W. about 75,000-90,000 ("EMA-31", Monsanto Company, St. Louis, Missouri) was substituted for the poly(acrylic acid) on an equal relative weight basis and the EMA was partially neutralized with 11.97 g of trisopropanol amine.

Into 170 g portions of the resulting emulsion was added, alternatively, one of the following materials:

| Example | Material Added |
|---------|----------------|
| 5U | 30 g water |
| 5V | 30 g of 20% $KH_2PO_4$ |

The capsule slurry viscosity and coated capsule permeability tests were performed for the batches of Example 5, using the methods previously described. When measuring the viscosity the spindle speed was 60 rpm and the spindle number 2 for batch 5U and 1 for batch 5V. The results obtained are listed below.

| Example | Added salt | Batch pH after encap-sulation | Final batch viscosity | Perme-ability |
|---------|------------|-------------------------------|-----------------------|---------------|
| 5U | none | 5.05 | 220 cps | 6.6% |
| 5V | potassium phosphate | 4.80 | 71 cps | 3.8% |

The above results demonstrate that the present invention, when used with carboxyl group polyelectrolytes of U.S. 4,100,103, other than PAA, provides a somewhat less but nevertheless significant and unexpected beneficial effect on the viscosity and permeability properties of the resulting capsule batch.

*Example 6*

The procedure of Example 1 was substantially repeated using the same relative amounts of components through the emulsification step with the exception that poly(styrene-co-maleic anhydride) (hereinafter referred to as SMA) (Scripset 520, Monsanto Company, St. Louis, Missouri) was substituted for the poly(acrylic acid) on an equal relative weight basis. The SMA was hydrolyzed by stirring in warm water with a quantity of KOH added such that the equivalence ratio of potassium ion to the carboxylic acid of the SMA was 0.3:1. The use of trisopropanol amine was eliminated from Example 6.

Into 170 g portions of the resulting emulsion was added, alternatively, one of the following materials.

| Example | Material Added |
|---------|----------------|
| 6W | 30 g water |
| 6X | 30 g 10% $KH_2PO_4$ |

The capsule slurry viscosity and coated capsule permeability tests were performed for the batches of Example 6, using the methods previously described. When measuring viscosity the spindle speed was 60 rpm and the spindle number 2 for batch 6W and 1 for batch 6X. The results obtained are listed below.

| Example | Added salt | Batch pH after encap-sulation | Final batch viscosity | Perme-ability |
|---------|------------|-------------------------------|-----------------------|---------------|
| 6W | none | 5.95 | 332 cps | 74% |
| 6X | potassium phosphate | 5.55 | 46 cps | 20% |

The above results demonstrate that the present invention, when applied to a process using SMA as the system modifier, provides significant and unexpected beneficial results on the viscosity and permeability properties of the resulting capsule batch.

*Example 7*

The procedure of Example 6 was substantially repeated using the same relative amounts of components with the exception that a reaction product of melamine and formaldehyde was substituted for the partially methylated methylol melamine resin on an equal relative weight basis. The melamine and formaldehyde reaction product was made by heating a mixture of 15 g of melamine, 37.5 g of 37% formaldehyde and 52.5 g of a water to 76°C with stirring until a clear solution was obtained (about 20 minutes). This solution was then used in place of the previously described Cymel.

Into 170 g portions of the resulting emulsion was added, alternatively, one of the following materials:

| Example | Material Added |
|---------|----------------|
| 7Y | 30 g water |
| 7Z | 30 g 10% $KH_2PO_4$ |

The capsule permeability test was performed for the batches of Example 7, using the method previously described. The results obtained are listed below.

| Example | Added salt | Batch pH after encap-sulation | Perme-ability |
|---------|------------|-------------------------------|---------------|
| 7Y | none | 6.15 | 25.4% |
| 7Z | potassium phosphate | 5.60 | 6.1% |

The above results demonstrate that the present invention, when applied to the process of U.S. 4,233,178, provides significant and beneficial results on the permeability properties of the resulting capsule batch.

## Claims

1. A process for manufacturing minute capsules comprising the step of establishing a dispersion of particles or droplets of a substantially water insoluble capsule nucleus material in an acidic aqueous manufacturing vehicle containing:

a) capsule wall precursor material selected from melamine and formaldehyde; monomeric methylol melamine or a low molecular weight polymer thereof; monomeric methylated methylol melamine or a low molecular weight polymer thereof; or any combination thereof; and

b) a negatively charged polymeric polyelectrolyte having a linear aliphatic hydrocarbon backbone with an average of two carboxyl groups for every four to six backbone carbons,

whereby the water soluble capsule wall precursor material polycondenses to form a condensation polymer resulting in

i) liquid-liquid phase separation of the resulting condensation polymer above a molecular weight, to be soluble in the aqueous manufacturing vehicle, and

ii) after continued polycondensation of the separated polymerization product, in formation of solid capsule wall material individually surrounding particles of the dispersed capsule nucleus material,

characterized in that said dispersion also contains a salt of a Periodic Group 1A cation or a tertiary or quaternary ammonium cation and an anion of a strong acid.

2. A process as claimed in claim 1 wherein a solution of the negatively charged polymeric polyelectrolyte is first established in the aqueous manufacturing vehicle, the capsule wall precursor material is then added; the capsule nucleus material is then dispersed into the aqueous manufacturing vehicle, and the salt is then added, after which polycondensation of the capsule wall precursor material occurs.

3. A process as claimed in claim 1 or 2 wherein the negatively charged polymeric polyelectrolyte is poly(acrylic acid).

4. A process as claimed in claim 1 or claim 2 wherein the negatively charged polymeric polyelectrolyte is poly(styrene-co-maleic anhydride).

5. A process as claimed in claim 1 or claim 2 wherein the negatively charged polymeric polyelectrolyte is poly(ethylene-co-maleic anhydride), poly(methylvinyl ether-co-maleic anhydride), poly(propylene-co-maleic anhydride), poly(butadiene-co-maleic anhydride), or poly(vinyl acetate-co-maleic anhydride).

6. A process as claimed in any one of the preceding claims wherein the negatively charged polymeric polyelectrolyte is present in an amount from about 0.4% to about 15% by weight based on the weight of the aqueous manufacturing vehicle.

7. A process as claimed in any one of the preceding claims wherein the strong acid salt is a chloride, sulphate, phosphate, nitrate, polyphosphate, citrate, maleate or fumarate salt.

8. A process as claimed in any one of the preceding claims wherein the salt is potassium phosphate.

9. A process as claimed in any one of the preceding claims wherein the salt is present in an amount from about 1% to about 10% by weight based on the weight of the aqueous manufacturing vehicle.

10. A process as claimed in any one of the preceding claims wherein the polycondensation reaction is effected at a temperature of about 40 to 95°C.

11. A process as claimed in claim 10 wherein the polycondensation reaction is effected at a temperature of about 50° to 60°C.

12. Use of minute capsules prepared by the method claimed in any preceding claim for pressure-sensitive sheet materials.

## Patentansprüche

1. Verfahren zur Herstellung von Mikrokapseln enthaltend die Stufe der Herstellung einer Dispersion von Teilchen oder Tröpfchen eines im wesentlichen wasserunlöslichen Kapselkernmaterials in einem sauren wässrigen Herstellungsmedium enthaltend:

a) Kapselwand-Vorläufermaterial ausgewählt aus Melamin und Formaldehyd; monomerem Methylolmelamin oder einem niedermolekularen Polymer davon; monomerem methyliertem Methylolmelamin oder einem niedermolekularen Polymer davon, oder irgendeiner Kombination davon; und

b) einen negativ geladenen polymeren Polyelektrolyten mit einem linearen aliphatischen Kohlenwasserstoff-Grundgerüst mit im Durchschnitt zwei Carboxylgruppen für jeweils vier bis sechs Kohlenstoffatome des Grundgerüstes, wobei das wasserlösliche Kapselwand-Vorläufermaterial unter Bildung eines Kondensationspolymeren polykondensiert, was zu

i) Flüssig-flüssig-Phasentrennung des entstehenden Kondensationspolymers oberhalb eines Molekulargewichts, das in dem wässrigen Herstellungsmedium löslich ist, führt, und

ii) nach fortgesetzter Polykondensation des abgetrennten Polymerisationsproduktes zur Bildung von festem Kapselwandmaterial, das die Teilchen des dispergierten Kapselkernmaterials individuell umgibt,

dadurch gekennzeichnet, dass die Dispersion auch ein Salz eines Kations der Gruppe 1A des Periodischen Systems oder ein tertiäres oder quaternäres Ammoniumkation und ein Anion einer starken Säure enthält.

2. Verfahren nach Anspruch 1, dadurch gekennzeichnet, dass zuerst eine Lösung des negativ geladenen polymeren Polyelektrolyten in dem wässrigen Herstellungsmedium gebildet wird, dann das Kapselwand-Vorläufermaterial zugefügt wird; das Kapselkernmaterial dann in das wässrige Herstellungsmedium dispergiert wird, und dann das Salz zugefügt wird, wonach Polykondensation des Kapselwand-Vorläufermaterials stattfindet.

3. Verfahren nach einem der Ansprüche 1 oder 2, dadurch gekennzeichnet, dass der negativ geladene polymere Polyelektrolyt Poly(acrylsäure) ist.

4. Verfahren nach Anspruch 1 oder 2, dadurch gekennzeichnet, dass der negativ geladene polymere Polyelektrolyt Poly(styrol-co-Maleinsäureanhydrid) ist.

5. Verfahren nach Anspruch 1 oder 2, dadurch gekennzeichnet, dass der negativ geladene polymere Polyelektrolyt Poly(äthylen-co-Maleinsäureanhydrid), Poly(methylvinyläther-co-Maleinsäureanhydrid), Poly(propylen-co-Maleinsäureanhydrid), Poly(butadien-co-Maleinsäureanhydrid), oder Poly-(vinylacetat-co-Maleinsäureanhydrid) ist.

6. Verfahren nach einem der vorhergehenden Ansprüche, dadurch gekennzeichnet, dass der negativ geladene polymere Polyelektrolyt in einer Menge von ca. 0,4 Gew.-% bis ca. 15 Gew.-%, bezogen auf das Gewicht des wässrigen Herstellungsmediums, vorhanden ist.

7. Verfahren nach einem der vorhergehenden Ansprüche, dadurch gekennzeichnet, dass das Salz einer starken Säure ein Chlorid, Sulfat, Phosphat, Nitrat, Polyphosphat, Citrat, Maleat oder Fumaratsalz ist.

8. Verfahren nach einem der vorhergehenden Ansprüche, dadurch gekennzeichnet, dass das Salz Kaliumphosphat ist.

9. Verfahren nach einem der vorhergehenden Ansprüche, dadurch gekennzeichnet, dass das Salz in einer Menge von ca. 1 Gew.-% bis ca. 10 Gew.-% auf das Gewicht des wässrigen Herstellungsmediums, vorhanden ist.

10. Verfahren nach einem der vorhergehenden Ansprüche, dadurch gekennzeichnet, dass die Polykondensationsreaktion bei einer Temperatur von ca. 40 bis 95°C durchgeführt wird.

11. Verfahren nach Anspruch 10, dadurch gekennzeichnet, dass die Polykondensationsreaktion bei einer Temperatur von ca. 50° bis 60°C durchgeführt wird.

12. Verwendung von nach dem in einem der vorhergehenden Ansprüche beanspruchten Verfahren hergestellten Mikrokapseln für druckempfindliche Blattmaterialien.

## Revendications

1. Procédé de fabrication de microcapsules, comprenant l'étape de préparation d'une dispersion de particules ou de gouttelettes d'une matière destinée à former des noyaux de capsules, pratiquement insoluble dans l'eau, dans un support de fabrication aqueux, acide contenant:

a) un matériau précurseur des parois de capsules choisi parmi les mélamine et formaldéhyde; mélamine méthylol monomère ou un de ses polymères à faible poids moléculaire; mélamine méthylol méthylée monomère ou un de ses polymères à faible poids moléculaire; ou une combinaison de ces composés; et

b) un polyélectrolyte polymère chargé négativement ayant une squelette hydrocarbonée aliphatique linéaire, avec une moyenne de deux groupes carboxyle pour tous les quatre ou six atomes de carbone du squelette,

procédé dans lequel le matériau précurseur des parois de capsules, soluble dans l'eau, se polycondense pour former un polymère de condensation produisant

i) une séparation de phase liquide-liquide du polymère de condensation obtenu, au-dessus d'un poids moléculaire permettant d'être soluble dans le support de fabrication aqueux, et

ii) après la poursuite de la polycondensation du produit de polymérisation séparé, la formation d'une matière solide des parois de capsules, entourant individuellement les particules de la matière des noyaux de capsules dispersés,

procédé caractérisé en ce que la dispersion contient également un sel d'un cation du groupe périodique 1A ou un cation d'un ammonium tertiaire ou quaternaire et un anion d'un acide fort.

2. Procédé selon la revendication 1, caractérisé en ce qu'une solution du polyélectrolyte polymère chargé négativement est d'abord préparé dans le support de fabrication aqueux, puis le matériau précurseur des parois de capsules est ajouté; la matière des noyaux de capsules est alors dispersée dans le support de fabrication aqueux et le sel est alors ajouté, après quoi se produit la polycondensation du matériau précurseur des parois de capsules.

3. Procédé selon l'une des revendications 1 ou 2, caractérisé en ce que le polyélectrolyte polymère chargé négativement est de l'acide polyacrylique.

4. Procédé selon l'une des revendications 1 ou 2, caractérisé en ce que le polyélectrolyte polymère chargé négativement est un copolymère styrène-anhydride maléique.

5. Procédé selon l'une des revendications 1 ou 2, caractérisé en ce que le polyélectrolyte polymère chargé négativement est un copolymère éthylène-anhydride maléique, méthylvinyl éther-anhydride maléique, propylène-anhydride maléique, butadiène-anhydride maléique ou acétate de polyvinyle-anhydride maléique.

6. Procédé selon l'une quelconque des revendications précédentes, caractérisé en ce que le polyélectrolyte polymère chargé négativement est présent dans une proportion d'environ 0,4% à environ 15% en poids, calculée sur le poids du support de fabrication aqueux.

7. Procédé selon l'une quelconque des revendications précédentes, caractérisé en ce que le sel d'acide fort est un chlorure, sulfate, phosphate, nitrate, polyphosphate, citrate, maléate ou fumarate.

8. Procédé selon l'une quelconque des revendications précédentes, caractérisé en ce que le sel est du phosphate de potassium.

9. Procédé selon l'une quelconque des revendications précédentes, caractérisé en ce que le sel est présent dans une proportion d'environ 1% à environ 10% en poids, calculé sur le poids du support de fabrication aqueux.

10. Procédé selon l'une quelconque des revendications précédentes, caractérisé en ce que la réaction de polycondensation s'effectue à une température d'environ 40 à 95°C.

11. Procédé selon la revendication 10, caractérisé en ce que la réaction de polycondensation s'effectue à une température de 50 à 60°C.

12. Utilisation de microcapsules préparées par le procédé selon l'une des revendications précédentes, comme matériau pour feuille sensible à la pression.